# FASCICULE DE BREVET EUROPEEN

(11) **EP 3 207 509 B1**
(45) Date de publication et mention de la délivrance du brevet: **06.11.2019**
(21) Numéro de dépôt: 15775769.1
(22) Date de dépôt: 15.09.2015
(51) Int. Cl.: G06Q 10/08

(54) **INSTALLATION LOGISTIQUE AVEC DES NAVETTES DE TRANSPORT DE COLIS ET DES EQUIPEMENTS PORTATIFS D'IDENTIFICATION DES COLIS**
LOGISTISCHE EINRICHTUNG MIT PAKETTRANSPORTSHUTTLES UND TRAGBAREN VORRICHTUNGEN ZUR IDENTIFIZIERUNG VON PAKETEN
LOGISTICS FACILITY WITH PARCEL TRANSPORT SHUTTLES AND PORTABLE DEVICES FOR IDENTIFYING PARCELS

(30) Priorité: 13.10.2014 FR 1459806
(43) Date de publication de la demande: 23.08.2017
(73) Titulaire: Solystic, 92220 Bagneux (FR)
(72) Inventeur: MIETTE, Emmanuel, F-95210 Saint Gratien (FR); CHIROL, Luc, F-75016 Paris (FR)
(74) Mandataire: Prugneau, Philippe
(86) Numéro de dépôt international: PCT/FR2015/052470
(87) Numéro de publication internationale: WO 2016/059314

(56) Documents cités:
- WO-A1-2011/109655
- WO-A1-2014/057182
- US-A1- 2002 008 621
- US-A1- 2007 124 077

## Description

### Domaine technique

L'invention concerne une installation pour la manutention de colis, comprenant des navettes motorisées autonomes adaptées pour transporter chacune un colis et une unité centrale de contrôle/commande apte à commander individuellement à distance lesdites navettes en circulation libre guidée à partir de données indicatives de la position spatiale instantanée de chaque navette.

### Technique antérieure

Une telle installation pour la manutention et le tri de colis, notamment des colis postaux, est déjà connue du brevet WO2014/057182. Dans cette installation connue, les navettes sont adaptées pour accoster des chariots gigognes sur lesquelles les colis sont placés manuellement par un opérateur.

Chaque chariot attelé à une navette et portant un colis est déplacé par la navette vers une zone de saisie d'informations apposées sur le colis.

La saisie des informations sur les colis peut se faire au moment du chargement de chaque colis sur un chariot, par exemple à l'aide d'un scanner portatif, du type décrit dans les documents US2007124077 et WO2011/109655. Mais cette saisie d'information au moment du chargement du colis sur un chariot peut être une procédure assez complexe qui ralentit la cadence du chargement des colis sur les chariots.

La saisie des informations sur les colis peut se faire en faisant passer sous un portique par exemple les chariots chargés avec les colis. Un tel agencement présente l'inconvénient de réduire la flexibilité de l'organisation de la navigation des navettes.

La saisie des informations sur les colis peut se faire en faisant passer sous un portique par exemple les chariots chargés avec les colis. Un tel agencement présente l'inconvénient de réduire la flexibilité de l'organisation de la navigation des navettes.

### Exposé de l'invention

Le but de l'invention est de remédier à ces inconvénients.

L'idée à la base de l'invention est de saisir les informations apposées sur les colis à l'aide d'un équipement électronique portatif nomade géolocalisable par l'unité centrale et ensuite de détecter une concordance entre la position spatiale de l'équipement au moment de la saisie d'information sur un colis et la position spatiale d'une navette qui transporte ce colis de manière à pouvoir associer en mémoire de l'unité centrale cette information, par exemple d'identification du colis, avec une autre donnée représentative de la navette qui transporte ce colis.

Plus particulièrement, l'invention a pour objet une installation pour la manutention de colis, comprenant des navettes motorisées autonomes adaptées pour transporter chacune un colis et une unité centrale de contrôle/commande apte à commander individuellement à distance lesdites navettes en circulation libre guidée à partir de données indicatives de la position spatiale instantanée de chaque navette, caractérisée en ce qu'elle comprend en outre au moins un équipement électronique portatif apte à saisir une information apposée sur un colis lorsqu'il est placé à proximité du colis et à transmettre cette information à ladite unité centrale, en ce que ladite unité centrale est agencée pour relever une position spatiale instantanée dudit équipement portatif en réponse à la saisie de par ledit équipement portatif, et en ce que ladite unité centrale est agencée en outre pour, à partir desdites données indicatives de la position spatiale instantanée des navettes et de ladite position spatiale instantanée de l'équipement portatif, détecter une concordance entre la position spatiale instantanée d'une certaine navette et la position spatiale instantanée de l'équipement portatif et en réponse à cette détection de concordance, mettre en correspondance ladite information associée audit colis avec des données associées à ladite certaine navette.

Avec un tel agencement, un Opérateur qui a en main l'équipement portatif peut faire des saisies d'informations à la volée sur les colis de façon nomade en se déplaçant le long des chemins de circulation des navettes.

Un tel agencement présente l'avantage de ne pas affecter le temps de chargement des colis sur les navettes.

La saisie d'information sur les colis n'est pas une saisie à poste fixe et donc elle ne contraint pas l'organisation de la navigation des navettes dans l'installation logistique.

On peut avoir plusieurs équipements portatifs en même temps dans l'installation pour un débit important de colis en entrée de l'installation.

L'installation selon l'invention peut avantageusement présenter les particularités suivantes :
- ledit équipement portatif peut être un lecteur de code barres;
- ledit équipement portatif peut être une caméra apte à former une image numérique du colis comprenant ladite information;
- les colis peuvent être des colis postaux;
- chaque colis peut être posé sur un chariot attelé à une navette;
- ladite information peut être une information d'identification unique d'un colis;
- ledit équipement portatif peut être équipé d'une balise de positionnement spatiale;
- l'installation peut être adaptée pour réaliser un tri acheminement/distribution des colis postaux.

### Présentation sommaire des dessins

La présente invention sera mieux comprise et d'autres avantages apparaîtront encore mieux à la lecture de la description détaillée qui suit et illustrée sur les dessins.
La figure 1 montre très schématiquement une installation avec des navettes transportant ici des colis postaux et un équipement portatif pour saisir une information d'identification sur les colis postaux.
La figure 2 illustre un équipement portatif à proximité d'un colis pour saisir à la volée une information d'identification du colis.

### Description d'un mode de réalisation

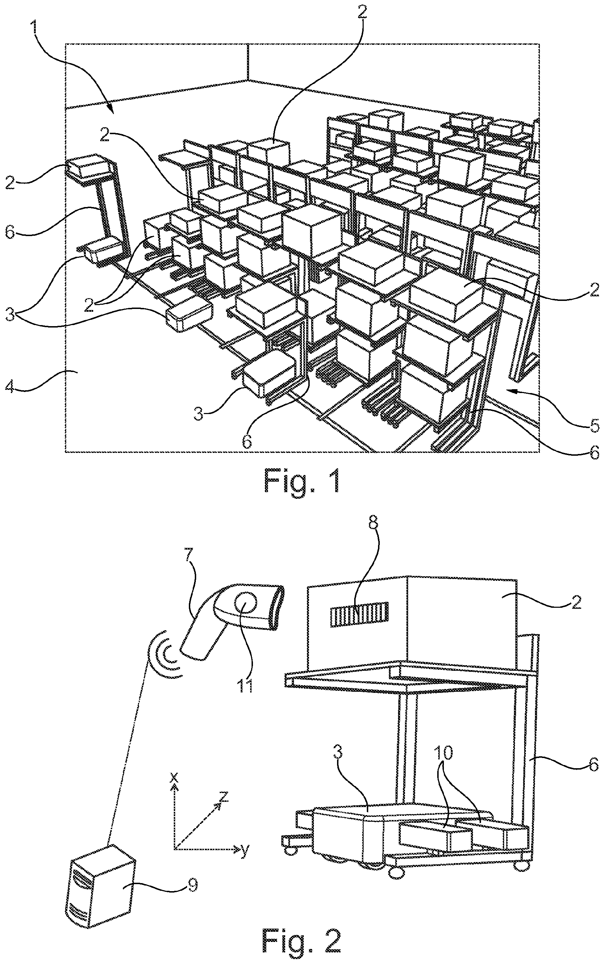

Sur la figure 1, on a illustré en partie une installation logistique 1 pour la manutention de colis, ici à titre d'exemple des colis postaux tels que 2, à l'aide de navettes 3 motorisées autonomes et guidées à distance par une unité centrale de contrôle/commande (non montrée sur la figure 1).

Les navettes circulent sur une plateforme 4, qui peut être pourvue de points de dépose et de chargement des colis 2 accessibles par des moyens de transport, tels que par exemple des camions destinés à amener et à remporter les colis 2.

Comme visible sur la figure 1, la plateforme 4 comprend une zone de rangement 5 destinée à recevoir des colis 3 chargés sur des chariots 6.

Les chariots 6 sont ici des chariots gigognes à étagère pouvant s'encastrer les uns dans les autres dans la zone de rangement comme montré sur la figure 1 de sorte que dans la zone de rangement 5 les colis peuvent être disposés en superposition.

Chaque chariot 6 a une étagère pour porter un colis 2 à la fois. Il est conçu pour pouvoir être attelé à une navette.

Le principe de fonctionnement de l'installation logistique est ici de charger sur les chariots les colis qui arrivent à un point de dépose de la plateforme.

Les chariots vides sont amenés par les navettes. Une fois chargé avec un colis, le chariot est transporté par la navette à laquelle il est attelé vers la zone de rangement par exemple où il est placé par exemple de manière ordonné pour réaliser un tri postal des colis. Une fois que le chariot avec son colis est placé dans la zone de rangement, la navette se dételle du chariot et peut revenir vers le point de chargement.

Sur la figure 2, On a illustré un équipement électronique portatif 7 qui est placé à proximité d'un colis 2 pour saisir une information apposée sur le colis et la transmettre à une unité centrale 9 de contrôle/commande de l'installation logistique 1 qui est distante de l'équipement 7.

Par conséquent, cette information peut être saisie par un Opérateur nomade à la volée en passant le long des chemins de circulations des navettes qui transportent les colis vers la zone de rangement.

Dans l'exemple, l'information 8 apposée sur le colis 2 est un code barres d'identification unique du colis. L'équipement 7 est ici un scanner de code barres qui est relié en communication sans fil à l'unité centrale 9.

A titre de variante, l'information 8 pourrait être une adresse postale de livraison du colis et l'équipement 7 pourrait être une caméra apte à former une image numérique du colis comportant l'adresse postale de livraison.

Sur la figure 2, le chariot 6 qui porte le colis 2 est attelé à une navette 3 par l'intermédiaire de moyens d'attelage rétractables illustrés par 10 de sorte que le chariot peut être attelé ou dételé de la navette automatiquement et la même navette peut reprendre un autre chariot pour poursuivre son processus de traitement logistique.

L'unité centrale 9 est apte à commander individuellement à distance chaque navette 3 en circulation libre guidée par l'intermédiaire d'un réseau de communication sans fil entre l'unité centrale 9 et chaque navette.

Selon l'invention, l'unité centrale 9 maintient en mémoire les positions spatiales instantanées des navettes 3 de façon à pouvoir les guider sur la plateforme. Ces positions spatiales instantanées des navettes peuvent par exemple être produites par un système de géolocalisation avec des balises posées respectivement sur chaque navette.

Sur la figure 2, on a représenté un référentiel spatial à 3 dimensions représenté par les trois axes xyz. Comme les chariots 6 sont des chariots gigognes ayant des hauteurs différentes, lorsqu'une navette accoste un chariot, elle peut être adaptée pour récupérer du chariot une indication du niveau en hauteur du chariot. Cette indication de hauteur combinée à la position spatiale instantanée de la navette sur la plateforme correspondante détermine une position spatiale instantanée estimée du colis, posé sur le chariot, dans les 3 axes du référentiel.

Selon l'invention, l'unité centrale 9 est agencée en outre pour relever la position spatiale instantanée de l'équipement portatif 7 en réponse à la saisie d'un code barres 8 par l'équipement sur un colis 2.

En particulier, l'équipement portatif 7 peut être muni d'une balise 11 de géolocalisation permettant à l'unité centrale 9 de connaître la position spatiale instantanée de l'équipement 7 dans les 3 axes du repère.

Il est entendu que la saisie de l'information 8 à l'aide de l'équipement portatif 7 s'effectue pendant le transport du colis sur la plateforme entre un point de chargement du colis sur un chariot motorisé par une navette et un point de rangement du colis, c'est à dire un point où le chariot est dételé de la navette.

L'instant de réception d'un code barres provenant d'un équipement portatif 7 (avec un code d'identification d'équipement 7) peut être une bonne approximation de l'instant de saisie du code barres. Suite à la réception d'un code barres par l'équipement 7, l'unité centrale 9 balaie en mémoire les données indicatives des positions spatiales instantanées des navettes pour détecter une concordance entre la position spatiale instantanée d'une certaine navette dans les trois axes du référentiel (en tenant compte du niveau du chariot attelé à la navette) et la position spatiale instantanée de l'équipement portatif 7 dans ce même référentiel.

En réponse à cette détection, l'unité centrale 9 peut établir alors en mémoire une correspondance entre le code barres d'identification physique du colis et ladite navette ce qui permet ensuite de réaliser un traitement individuel sur le colis.

En pratique, dans l'unité centrale 9, les colis qui sont d'abord chargés sur les chariots sont identifiées chacun par un code logique.

A chaque fois qu'un code barres est saisi à la volée sur un colis 2 et qu'une détection de concordance est établie, l'unité centrale 9 peut par exemple remplacer en mémoire le code logique du colis par le code d'identification physique du colis.

En variante, les positions spatiales instantanées des navettes et les positions spatiales instantanées du ou des équipements portatifs peuvent être produites de façon cyclique par le système de géolocalisation et avec des fréquences différentes.

Dans ce cas, il peut être prévu que l'équipement portatif 7 associe une date de saisie à l'information 8 de façon à limiter le champ de recherche de concordance en mémoire de l'unité centrale 9.

Il va de soi que la présente invention ne saurait être limitée à la description qui précède d'un de ses modes de réalisation, susceptible de subir quelques modifications sans pour autant sortir du cadre de l'invention. L'invention pourrait aussi s'étendre à d'autres articles que les colis.

## Revendications

1. Installation (1) pour la manutention de colis (2), comprenant des navettes (3) motorisées autonomes adaptées pour transporter chacune un colis et une unité centrale (9) de contrôle/commande apte à commander individuellement à distance lesdites navettes en circulation libre guidée à partir de données indicatives de la position spatiale instantanée de chaque navette, **caractérisée en ce qu'**elle comprend en outre au moins un équipement électronique (7) portatif apte à saisir une information (8) apposée sur un colis lorsqu'il est placé à proximité du colis et à transmettre cette information à ladite unité centrale, **en ce que** ladite unité centrale est agencée pour relever une position spatiale instantanée dudit équipement portatif en réponse à la saisie de ladite information par ledit équipement portatif, et **en ce que** ladite unité centrale est agencée en outre pour, à partir desdites données indicatives de la position spatiale instantanée des navettes et de ladite position spatiale instantanée de l'équipement portatif, détecter une concordance entre la position spatiale instantanée d'une certaine navette et la position spatiale instantanée de l'équipement portatif et en réponse à cette détection de concordance, mettre en correspondance ladite information associée audit colis avec des données associées à ladite certaine navette.

2. Installation selon la revendication 1, **caractérisée en ce que** ledit équipement portatif (7) est un lecteur de code barres.

3. Installation selon la revendication 1, **caractérisée en ce que** ledit équipement portatif (7) est une caméra apte à former une image numérique du colis comprenant ladite information.

4. Installation selon la revendication 1, **caractérisé en ce que** les colis sont des colis postaux.

5. Installation selon la revendication 1, **caractérisée en ce que** chaque colis est posé sur un chariot (6) attelé à une navette (4).

6. Installation selon la revendication 1, **caractérisée en ce que** ladite information (8) est une information d'identification unique d'un colis.

7. Installation selon la revendication 1, **caractérisée en ce que** ledit équipement portatif (7) est équipé d'une balise (1) de positionnement spatiale.

8. Installation selon la revendication 4, **caractérisée en ce qu'**elle est adaptée pour réaliser un tri acheminement/distribution des colis postaux.

## Patentansprüche

1. Einrichtung (1) für die Handhabung von Frachtstücken (2), umfassend motorisierte autonome Förderfahrzeuge (3), die ausgebildet sind, um jedes ein Frachtstück zu transportieren, und eine zentrale Regel-/Steuereinheit (9), die in der Lage ist, auf Entfernung die im freien Umlauf geführten Förderfahrzeuge ausgehend von Daten, die die momentane räumliche Position jedes Förderfahrzeugs anzeigen, individuell zu steuern,
**dadurch gekennzeichnet,**
**dass** sie ferner wenigstens eine tragbare elektronische Ausrüstung (7) umfasst, die in der Lage ist, eine auf einem Frachtstück angebrachte Information (8) zu erfassen, wenn die Ausrüstung in der Nähe des Frachtstücks platziert ist, und diese Information an die zentrale Einheit zu übermitteln,
**dass** die zentrale Einheit ausgebildet ist, um eine momentane räumliche Position der tragbaren Ausrüstung in Reaktion auf die Erfassung der Information durch die tragbare Ausrüstung zu erheben, und
**dass** die zentrale Einheit ferner ausgebildet ist, um ausgehend von den für die momentane räumliche Position der Förderfahrzeuge indikativen Daten und der momentanen räumlichen Position der tragbaren Ausrüstung eine Konkordanz zwischen der momentanen räumlichen Position eines bestimmten Förderfahrzeugs und der momentanen räumlichen Position der tragbaren Ausrüstung zu detektieren und in Reaktion auf diese Detektion der Konkordanz, die mit dem Frachtstück verknüpfte Information mit mit dem bestimmten Förderfahrzeug verknüpften Daten in Übereinstimmung zu bringen.

2. Einrichtung nach Anspruch 1, **dadurch gekennzeichnet, dass** die tragbare Ausrüstung (7) ein Barcodelesegerät ist.

3. Einrichtung nach Anspruch 1, **dadurch gekennzeichnet, dass** die tragbare Einrichtung (7) eine Kamera ist, die in der Lage ist, ein die Information umfassendes digitales Bild des Frachtstücks zu bilden.

4. Einrichtung nach Anspruch 1, **dadurch gekennzeichnet, dass** die Frachtstücke postalische Frachtstücke sind.

5. Einrichtung nach Anspruch 1, **dadurch gekennzeichnet, dass** jedes Frachtstück auf einem an einem Förderfahrzeug (4) angeschlossenen Laufwagen (6) abgelegt wird.

6. Einrichtung nach Anspruch 1, **dadurch gekennzeichnet, dass** die Information (8) eine eindeutige Identifikationsinformation eines Frachtstücks ist.

7. Einrichtung nach Anspruch 1, **dadurch gekennzeichnet, dass** die tragbare Ausrüstung (7) mit einem Raumpositions-Signalgeber (1) ausgestattet ist.

8. Einrichtung nach Anspruch 4, **dadurch gekennzeichnet, dass** sie angepasst ist zum Verwirklichen einer Sortierung bei der Anlieferung/Verteilung der postalischen Frachtstücke.

## Claims

1. An installation (1) for handling parcels (2), said installation including independently self-propelled motor-driven shuttle carts (3), each of which is adapted to transport a parcel, and a monitoring and control central unit (9) that is suitable for individually and remotely controlling said shuttle carts to travel in freely guided manner on the basis of data indicating the instantaneous three-dimensional position of each shuttle cart, said installation being **characterized in that** it further includes at least one handheld electronic unit (7) suitable for inputting information (8) marked on a parcel when it is in the vicinity of the parcel and for transmitting said information to said central unit, **in that** said central unit is arranged to read an instantaneous three-dimensional position of said handheld unit in response to said information being input by said handheld unit, and **in that** said central unit is further arranged so that, on the basis of said data indicating the instantaneous there-dimensional positions of the shuttle carts and on the basis of said instantaneous three-dimensional position of the handheld unit, said central unit detects a match between the instantaneous three-dimensional position of a certain shuttle cart and the instantaneous three-dimensional position of the handheld unit, and, in response to such a match being detected, puts said information associated with said parcel into correspondence with data associated with said certain shuttle cart.

2. An installation according to claim 1, **characterized in that** said handheld unit (7) is a bar code reader.

3. An installation according to claim 1, **characterized in that** said handheld unit (7) is a camera suitable for forming a digital image of the parcel that includes said information.

4. An installation according to claim 1, **characterized in that** the parcels are postal parcels.

5. An installation according to claim 1, **characterized in that** each parcel is placed on a trolley (6) coupled to a shuttle cart (4).

6. An installation according to claim 1, **characterized in that** said information (8) is unique identification information that uniquely identifies a parcel.

7. An installation according to claim 1, **characterized in that** said handheld unit (7) is equipped with a three-dimensional positioning geotag (1).

8. An installation according to claim 4, **characterized in that** it is adapted to perform outward/inward sorting on postal parcels.
